# EUROPÄISCHE PATENTANMELDUNG

(11) **EP 4 553 402 A1**
(43) Veröffentlichungstag der Anmeldung: **14.05.2025**
(21) Anmeldenummer: 24211450.2
(22) Anmeldetag: 07.11.2024
(51) Int. Cl.: F24S 25/12, F24S 25/35, F24S 25/636, H02S 20/20

(54) **SOLARMODULBEFESTIGUNGSVORRICHTUNG**

(30) Priorität: 07.11.2023 DE 102023130837
(71) Anmelder: Zimmermann, Robert, 88436 Eberhardzell (DE)
(72) Erfinder: Zimmermann, Robert, 88436 Eberhardzell (DE)
(74) Vertreter: Daub, Thomas

(57) **Zusammenfassung**

Die Erfindung geht aus von einer Solarmodulbefestigungsvorrichtung mit einer Montageschiene (34, 36, 38, 40) zur Befestigung mehrerer Solarmodule(12, 14, 16, 18), wobei die Montageschiene (34, 36, 38, 40) zumindest eine zumindest im Wesentlichen durchgängige Auflagefläche (44, 46) aufweist, auf die die Solarmodule (12, 14, 16, 18) zur Befestigung aufschiebbar sind.

Es wird vorgeschlagen, dass die Montageschiene (34, 36, 38, 40) zumindest ein Montagesicherungselement (66, 68) aufweist, das dazu vorgesehen ist, ein Aufschieben von Solarmodulen (12, 14, 16, 18) auf die Auflagefläche (44, 46) in einer Montagerichtung (204) zuzulassen und die Solarmodule (12, 14, 16, 18) in Montagepositionen gegen ein Verschieben entgegen der Montagerichtung (204) zu sichern.

## Beschreibung

### Stand der Technik

Die Erfindung betrifft eine Solarmodulbefestigungsvorrichtung nach dem Oberbegriff des Patentanspruchs 1.

Es ist bereits eine Solarmodulbefestigungsvorrichtung mit einer Montageschiene zur Befestigung mehrerer Solarmodule, wobei die Montageschiene zumindest eine zumindest im Wesentlichen durchgängige Auflagefläche aufweist, auf die die Solarmodule zur Befestigung aufschiebbar sind, vorgeschlagen worden.

Die Aufgabe der Erfindung besteht insbesondere darin, eine gattungsgemäße Vorrichtung mit verbesserten Eigenschaften hinsichtlich einer einfachen und schnellen Montage von Solarmodulen und einer kostengünstigen Herstellung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Solarmodulbefestigungsvorrichtung mit einer Montageschiene zur Befestigung mehrerer Solarmodule, wobei die Montageschiene zumindest eine zumindest im Wesentlichen durchgängige Auflagefläche aufweist, auf die die Solarmodule zur Befestigung aufschiebbar sind.

Es wird vorgeschlagen, dass die Montageschiene zumindest ein Montagesicherungselement aufweist, das dazu vorgesehen ist, ein Aufschieben von Solarmodulen auf die Auflagefläche in einer Montagerichtung zuzulassen und die Solarmodule in Montagepositionen gegen ein Verschieben entgegen der Montagerichtung zu sichern.

Unter einer "Solarmodulbefestigungsvorrichtung" soll vorzugsweise eine Vorrichtung verstanden werden, mittels der Solarmodule auf einem Untergrund aufgestellt werden können. Die Solarmodulbefestigungsvorrichtung bildet eine tragende Struktur aus, mittels der die Solarmodule an dem Untergrund befestigt sind. Über die Solarmodulbefestigungsvorrichtung werden die Gewichtskraft der Solarmodule und weitere auf die Solarmodule wirkende Kräfte, wie beispielsweise Windkräfte in den Untergrund abgeleitet. Die Solarmodulbefestigungsvorrichtung weist vorzugsweise ein Grundgestell auf. Das Grundgestell kann vorzugsweise mehrere Stützelemente aufweisen, die mit dem Untergrund fest verbunden sind. Unter einem "Stützelement" soll vorzugsweise ein Element verstanden werden, das fest mit dem Untergrund verbunden ist. Vorzugsweise ist das Stützelement in den Boden eingebracht. Das Stützelement ist als ein länglicher Träger ausgebildet, der dazu vorgesehen ist, entlang seiner Längsachse in den Boden eingebracht zu werden. Vorzugsweise ist ein Stützelement als ein Rammprofil ausgebildet, das zur Befestigung an dem Untergrund dazu vorgesehen ist, in den Untergrund gerammt zu werden. Unter "an dem Untergrund befestigt" soll vorzugsweise so mit dem Untergrund verbunden verstanden werden, dass Kräfte, vorzugsweise zumindest vertikal wirkende Kräfte, sowie seitlich wirkende Kräfte, in den Untergrund abgeleitet werden können. Vorzugsweise sind an dem Untergrund befestigte Elemente, wie die Stützelemente in den Boden eingebracht, also insbesondere eingerammt, oder eingedreht. Grundsätzlich ist es vorzugsweise auch denkbar, dass ein Stützelement als ein Träger ausgebildet ist, der zur Verbindung mit einer Struktur, wie beispielsweise einem Dach, oder einem anderen Aufbau vorgesehen ist. Mittels der Solarmodulbefestigungsvorrichtung sind die Solarmodule vorzugsweise starr und unbeweglich montiert. Die Solarmodule sind mittels der Solarmodulbefestigungsvorrichtung fix in einer definierten Stellung montiert.

Unter einem 'Solarmodul" soll insbesondere ein Modul verstanden werden, welches dazu vorgesehen ist, eine Energie des Sonnenlichts umzuwandeln. Vorzugsweise ist ein Solarmodul zur Erzeugung eines elektrischen Stroms aus Sonnenlicht vorgesehen. Vorzugsweise ist das Solarmodul als ein Photovoltaikmodul ausgebildet. Unter einer "Montageschiene" soll vorzugsweise eine Schiene verstanden werden, auf der zumindest ein Solarmodul, vorzugsweise mehrere Solarmodule zumindest teilweise fest montierbar sind. Eine Montageschiene ist zu einer Befestigung zumindest eines Solarmoduls, vorzugsweise mehrerer Solarmodule auf jeweils einer Seite vorgesehen. Ein Solarmodul ist vorzugsweise über zwei Montageschienen an der Solarmodulbefestigungsvorrichtung fest montiert. Ein Solarmodul ist vorzugsweise jeweils mit einem seitlichen Randbereich mit einer Montageschiene verbunden. Eine Montageschiene ist dazu vorgesehen, dass zumindest ein Solarmodul, vorzugsweise mehrere Solarmodule, in einem Seitenbereich zumindest teilweise auf der Montagschiene aufliegen und über jeweils zumindest ein Befestigungsmodul kraft- und/oder formschlüssig an die Montageschiene anbindbar sind. Unter einer "Auflagefläche" soll vorzugsweise eine Fläche verstanden werden, auf der ein Solarmodul mit einem Abstützbereich auf der Montageschiene vorzugsweise flächig aufliegt. Die Auflagefläche ist vorzugsweise als eine ebene Fläche ausgebildet. Ein Solarmodul liegt mit einer Rückseite eines seitlichen Rahmenbereichs in einem montierten oder vormontierten Zustand auf der Auflagefläche der Montageschiene auf. Die Auflagefläche ist als eine Stützfläche ausgebildet. Die Auflagefläche ist dazu vorgesehen Kräfte, beispielsweise Gewichtskräfte der Solarmodule abzustützen. Vorzugsweise werden die Solarmodule zur Anbindung an die Montageschiene auf die Auflagefläche gedrückt. Vorzugsweise werden die Solarmodule zur Befestigung an die Montageschiene zwischen der Auflagefläche und einem Gegenstück, beispielsweise einer Klemmfläche eines Klemmelements eingeklemmt und dadurch kraftschlüssig montiert. Unter "aufschiebbar" soll vorzugsweise verstanden werden, dass die Solarmodule, insbesondere mit einem Randbereich auf den Auflageflächen aufliegen und gleitend auf den Auflageflächen verschiebbar sind.

Unter einem "Montagesicherungselement" soll vorzugsweise ein Sicherungselement verstanden werden, das dazu vorgesehen ist, ein Solarmodul in einer definierten Stellung kraft- und/oder formschlüssig zu halten. Das Montagesicherungselement ist zur formschlüssigen Sicherung gegen ein Verschieben entgegen der Montagerichtung vorgesehen. Vorzugsweise weist das Montagesicherungselement eine schräge Rampenfläche auf, über die ein Element, wie insbesondere ein Solarmodul, in einer Montagerichtung verfahren werden kann. Vorzugsweise weist das Montagesicherungselement eine Sicherungsfläche auf, an die ein Solarmodul, bei einer Bewegung entgegen der Montagerichtung formschlüssig anschlägt. Die Sicherungsfläche ist dazu vorgesehen, ein Verfahren eines Solarmoduls entgegen der Montagerichtung durch einen formschlüssigen Kontakt zu verhindern. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Montagerichtung" soll vorzugsweise eine Richtung verstanden werden, in der die Solarmodule auf die Montageschienen aufgeschoben werden können. Die Montagerichtung verläuft vorzugsweise von einem vorderen, unteren Ende der Montageschienen zu einem hinteren, oberen Ende der Montageschienen. Unter einer "Montageposition" soll vorzugsweise eine Position eines Solarmoduls auf der Montageschiene verstanden werden, in der das Solarmodul korrekt zur Befestigung an der Montageschiene ausgerichtet ist. In der Montageposition ist das Solarmodul mittels Befestigungsmodulen verliersicher an den Montageschienen montierbar. Durch eine erfindungsgemäße Ausgestaltung kann vorteilhaft einfach eine Montageschiene bereitgestellt werden, bei der Solarmodule besonders einfach auf der Montageschiene in einem vormontierten Zustand gehalten werden können, bevor diese mittels eines Befestigungsmoduls fest montiert werden. Dadurch kann eine Montage der Solarmodule auf der Solarmodulbefestigungsvorrichtung besonders schnell und einfach erfolgen. Dadurch können insbesondere Kosten für die Installation eines Systems aus Solarmodulen und einer Solarmodulbefestigungsvorrichtung vorteilhaft reduziert werden.

Weiter wird vorgeschlagen, dass das zumindest eine Montagesicherungselement auf der Auflagefläche angeordnet ist und sich von dieser erhebt. Dadurch kann das Montagesicherungselement besonders vorteilhaft zur Montagesicherung eines Solarmoduls ausgebildet werden.

Ferner wird vorgeschlagen, dass das zumindest eine Montagesicherungselement als eine aus der Auflagefläche ausgebogene Lasche ausgebildet ist. Unter einer "ausgebogenen Lasche" soll vorzugsweise ein einstückig mit der Auflagefläche ausgebildetes Element verstanden werden, das teilweise von einem Rest der Auflagefläche abgetrennt und in eine Richtung von der Auflagefläche weg gebogen ist. Dadurch kann das Montagesicherungselement besonders einfach ausgebildet werden.

Es wird weiterhin vorgeschlagen, dass die Montageschiene eine vertikale Wandung aufweist, die zumindest in einem Teilbereich eine seitliche Abstützfläche für die Solarmodule ausbildet. Unter einer "vertikalen Wandung" soll vorzugsweise eine Wandung verstanden werden, die sich in einer vertikalen Richtung nach oben von der Auflagefläche weg erstreckt und eine seitliche Anlagefläche ausbildet. Dadurch kann die Montageschiene besonders vorteilhaft zum einfachen Aufschieben der Solarmodule ausgebildet werden. Durch die seitliche Abstützung der Solarmodule durch die vertikale Wandung kann ein Solarmodul beim Aufschieben auf die Montageschiene besonders vorteilhaft geführt werden.

Des Weiteren wird vorgeschlagen, dass die vertikale Wandung der Montageschiene schräg ausgebildet ist und lediglich in einem oberen, von der Auflagefläche abgewandten Bereich die seitliche Abstützfläche ausbildet. Unter "schräg ausgebildet" soll vorzugsweise verstanden werden, dass die vertikale Wandung einen Winkel mit der Auflagefläche einschließt, der ungleich 90 Grad ist. Die vertikale Wandung ist vorzugsweise in Richtung der angrenzenden Auflagefläche geneigt. Die vertikale Wandung schließt mit der angrenzenden Auflagefläche einen Winkel ein, der kleiner ist als 90 Grad. Die vertikale Wandung schließt mit der angrenzenden Auflagefläche einen Winkel ein, der zwischen 89 Grad und 75 Grad, vorzugsweise zwischen 85 Grad und 80 Grad liegt. Dadurch kann eine seitliche Anlagefläche für ein Solarmodul vorteilhaft klein ausgestaltet werden. wodurch ein Reibwiderstand bei einer Montage, insbesondere bei einem Aufschieben eines Solarmoduls auf die Montageschiene vorteilhaft gering gehalten werden kann, wobei eine seitliche Führung stets gewährleistet ist.

Weiterhin wird vorgeschlagen, dass die Montageschiene eine zweite zumindest im Wesentlichen durchgängige Auflagefläche aufweist, auf die weitere Solarmodule zur Befestigung aufschiebbar sind. Unter einer "zweiten Auflagefläche" soll vorzugsweise eine im Wesentlichen gleich ausgebildete Auflagefläche verstanden werden, die vorzugsweise beabstandet zu der ersten Auflagefläche ausgebildet ist und die zur Auflage von Solarmodulen einer weiteren Reihe an Solarmodulen vorgesehen ist. Die zweite Auflagefläche verläuft parallel zu der ersten Auflagefläche. Die zweite Auflagefläche ist vorzugsweise in einer Ebene mit der ersten Auflagefläche ausgebildet. Die zweite Auflagefläche ist vorzugsweise auf einer der ersten Auflagefläche gegenüberliegenden Seite der Montageschiene ausgebildet. Dadurch kann die Montageschiene vorteilhaft zur Befestigung von zwei Reihen an Solarmodulen ausgebildet werden.

Außerdem wird vorgeschlagen, dass die Montageschiene eine zu den Auflageflächen erhöhte Montagefläche aufweist, die sich zwischen den Auflageflächen erstreckt und zur Anbindung von Befestigungsmodulen zur Befestigung der Solarmodule vorgesehen ist. Unter einer "Montagefläche" soll vorzugsweise eine Fläche verstanden werden, auf der ein Befestigungsmodul verliersicher montierbar ist. Dadurch kann die Montageschiene besonders vorteilhaft zur Anbindung von Befestigungsmodulen ausgebildet werden.

Es wird weiter vorgeschlagen, dass die Montageschiene in einer zu den Auflageflächen erhöhten Montagefläche zur Befestigung eines Befestigungsmoduls mehrere Montagelöcher aufweist. Unter einem "Befestigungsmodul" soll vorzugsweise ein Modul verstanden werden, das zur festen Montage eines Solarmoduls vorgesehen ist. Das Befestigungsmodul ist in einem montierten Zustand zur form- und/oder kraftschlüssigen Verbindung eines Solarmoduls mit der Montageschiene vorgesehen. Ein Montagemodul ist vorzugsweise dazu vorgesehen, ein Solarmodul mittels einer Klemmung an der Montageschiene zu befestigen. Grundsätzlich wäre es auch denkbar, dass ein Befestigungsmodul zu einer formschlüssigen Verbindung mit einem Solarmodul vorgesehen ist. Das Befestigungsmodul ist dazu vorgesehen, kraft- und/oder formschlüssig an der Montageschiene befestigt zu werden. Dadurch kann die Montageschiene besonders einfach zur Anbindung der Solarmodule ausgebildet werden.

Zudem wird vorgeschlagen, dass zwei Montagelöcher als Vormontage- und Positionierlöcher ausgebildet sind, die jeweils einen unterschiedlichen Durchmesser aufweisen. Unter einem "Vormontage- und Positionierloch" soll vorzugsweise ein Loch, vorzugsweise ein Durchgangsloch oder Sackloch mit rundem Querschnitt verstanden werden, das dazu vorgesehen ist, dass ein korrespondierendes Element, wie insbesondere ein Positionierstift zu einer Montage, insbesondere einer Vormontage darin eingebracht werden kann. Durch die unterschiedlichen Durchmesser der Vormontage- und Positionierlöcher ist lediglich eine korrekte Montage eines zu befestigenden Befestigungsmoduls möglich. Dadurch kann vorteilhaft eine fehlerfreie Montage erleichtert werden.

Weiter wird vorgeschlagen, dass die Montageschiene in der Montagefläche ein als Befestigungsloch ausgebildetes Montageloch aufweist, das vorzugsweise zwischen den beiden als Vormontage- und Positionierlöcher ausgebildeten Montagelöchern angeordnet ist und das dazu vorgesehen ist, dass ein Befestigungsmittel, wie insbesondere ein Schraubenelement zur Anbindung eines Befestigungsmoduls hindurch ragt. Dadurch kann das Befestigungsmodul besonders einfach an die Montagefläche angebunden werden.

Ferner wird vorgeschlagen, dass die Montageschiene in der Montagefläche das als Befestigungsloch ausgebildete Montageloch aufweist, das sich bis in die vertikale Wandung erstreckt, die zwischen der Montagefläche und der ersten Auflagefläche angeordnet ist. Der Teilbereich des als Befestigungsloch ausgebildeten Montagelochs weist eine Breite auf, die größer ist als in dem Bereich der Montagefläche. Der Teilbereich des als Befestigungsloch ausgebildeten Montagelochs, der sich in die vertikale Wandung erstreckt, ist insbesondere breiter ausgebildet als ein Schraubenkopf eines Schraubenelements des Befestigungsmoduls. Der Teilbereich des als Befestigungsloch ausgebildeten Montagelochs, der sich in die vertikale Wandung erstreckt, ist dazu vorgesehen, dass ein Schraubenelement mit seinem Schraubenkopf zur Anbindung des Schraubenelements und damit des Befestigungsmoduls hindurch geführt werden kann. Dadurch kann vorzugsweise eine einfache Montage des Befestigungsmoduls gewährleistet werden.

Es wird weiterhin vorgeschlagen, dass die Solarmodulbefestigungsvorrichtung ein Befestigungsmodul aufweist, das dazu vorgesehen ist, wenigstens ein Solarmodul klemmend an der Montageschiene zu befestigen, wobei das Befestigungsmodul dazu vorgesehen ist, an einem als Befestigungsloch ausgebildeten Montageloch befestigt zu werden. Unter einem "Befestigungsmodul" soll vorzugsweise ein Modul verstanden werden, das in einem montierten Zustand zur kraft- und/oder formschlüssigen Verbindung eines Solarmoduls mit der Montageschiene vorgesehen ist. Dadurch kann ein Solarmodul besonders einfach an der Montagschiene befestigt werden.

Des Weiteren wird vorgeschlagen, dass das Befestigungsmodul dazu vorgesehen ist, an den Montagelöchern selbstsichernd vormontiert zu werden. Unter "selbstsichernd vormontiert" soll vorzugsweise verstanden werden, dass das Befestigungsmodul alleinstehend an der Montageschiene vormontiert werden kann. Das Befestigungsmodul ist dazu vorgesehen, durch sein Federelement eine Vorspannkraft auf ein Schraubenelement des Befestigungsmoduls auszuüben. Das Befestigungsmodul ist dazu vorgesehen, mit seinem Schraubenelement zur selbstsichernden Vormontage an einem als Befestigungsloch ausgebildeten Montageloch eingeklemmt zu werden. Dadurch kann eine Montage der Solarmodule besonders einfach mit den einfach vormontierten Befestigungsmodulen erfolgen. Eine Montage von Solarmodulen an den Montageschienen kann besonders einfach und schnell erfolgen.

Weiterhin wird vorgeschlagen, dass das Befestigungsmodul ein Klemmelement und ein Federelement aufweist, wobei das Federelement zwischen der Montagefläche und dem Klemmelement angeordnet ist. Unter einem "Klemmelement" soll vorzugsweise ein Element verstanden werden, das dazu vorgesehen ist, ein Solarmodul zwischen sich und einer Auflagefläche einzuklemmen. Das Klemmelement ist über ein Schraubenelement und eine Mutter des Befestigungsmoduls an die Montageschiene angebunden. Durch Anziehen des Schraubenelements an der mit dem Klemmelement verbundenen Mutter wird das Klemmelement in Richtung der Auflageflächen bewegt. Das Federelement ist vorzugsweise als eine Druckfeder ausgebildet. Das Federelement ist dazu vorgesehen, entgegen einer Federkraft gestaucht zu werden. Das Federelement ist vorzugsweise aus einem Kunststoff gebildet. Das Federelement weist vorzugsweise einen ersten Anbindungsbereich auf, mit dem das Federelement an dem Klemmelement anliegt. Das Federelement weist vorzugsweise einen zweiten Anbindungsbereich auf, mit dem das Federelement an der Montagefläche der Montageschiene anliegt. Das Federelement ist dazu vorgesehen, eine Haltekraft bereitzustellen, mit der das Befestigungsmodul an dem Montageloch der Montageschiene zur Vormontage verliersicher gehalten werden kann. Dadurch kann das Befestigungsmodul besonders einfach ausgebildet werden.

Außerdem wird vorgeschlagen, dass das Befestigungsmodul über als Vormontage- und Positionierlöcher ausgebildete Montagelöcher positionssicher vormontierbar ist, wobei vorzugsweise das Federelement Positionierstifte aufweist, die zur Vormontage in die als Vormontage- und Positionierlöcher ausgebildeten Montagelöcher eingebracht werden. Dadurch kann das Federelement und damit das gesamte Befestigungsmodul besonders einfach in einer korrekten Weise an der Montageschiene befestigt werden.

Die erfindungsgemäße Solarmodulbefestigungsvorrichtung soll hierbei nicht auf die oben beschriebene Anwendung und Ausführungsform beschränkt sein. Insbesondere kann die erfindungsgemäße Solarmodulbefestigungsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht eines Systems eines Teils einer Solarmodulbefestigungsvorrichtung mit mehreren Solarmodulen, die in Reihen über Montageschienen an der Solarmodulbefestigungsvorrichtung montiert sind,
- Fig. 2: eine schematische Schnittansicht durch eine Montageschiene der zwei Auflageflächen, auf denen jeweils ein Solarmodul aufliegt,
- Fig. 3: eine schematische Schnittansicht durch eine Montageschiene mit einem Befestigungsmodul in einem vormontierten Zustand,
- Fig. 4: eine schematische Schnittansicht durch eine Montageschiene mit einem Befestigungsmodul in einem montierten Zustand, in dem dieses die zwei Solarmodule an der Montageschiene befestigt,
- Fig. 5: eine schematische Detailansicht eines Ausschnitts einer Montageschiene mit zwei Montagesicherungselementen, die zwei Solarmodule in einer vormontierten Stellung sichern,
- Fig. 6: eine schematische Schnittansicht einer Montageschiene mit zwei auf den Auflageflächen angeordneten Montagesicherungselementen,
- Fig. 7: eine schematische Ansicht einer Montageschiene mit einer Detailansicht eines Befestigungsbereichs der Montageschiene zur Anbindung eines Befestigungsmoduls,
- Fig. 8: eine schematische Seitenansicht von Abschnitten der Montageschiene,
- Fig. 9: eine schematische Draufsicht von Abschnitten der Montageschiene,
- Fig. 10: eine schematische Ansicht von unten auf Abschnitte der Montageschiene,
- Fig. 11: eine schematische Ansicht eines Teils der Montageschiene mit einem vormontierten Befestigungsmodul,
- Fig. 12: eine schematische Ansicht eines Teils einer Solarmodulbefestigungsvorrichtung während einer Montage eines Solarmoduls, das auf zwei Montageschienen aufgeschoben wird, und

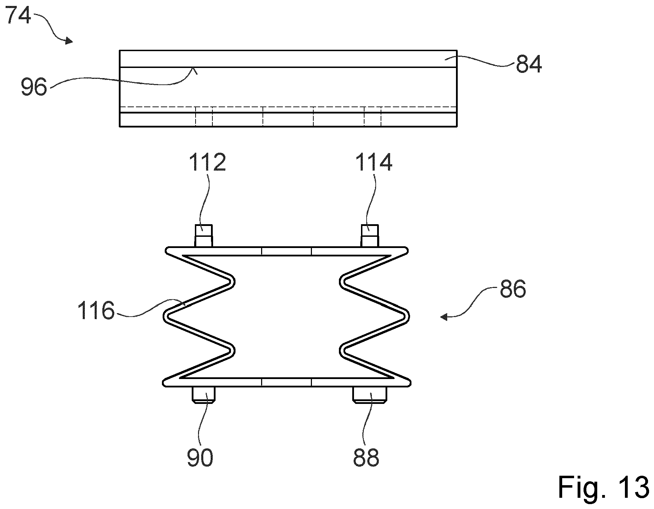

- Fig. 13: eine schematische Ansicht eines Teils eines Befestigungsmoduls mit dem Klemmelement und dem Federelement.

### Beschreibung des Ausführungsbeispiels

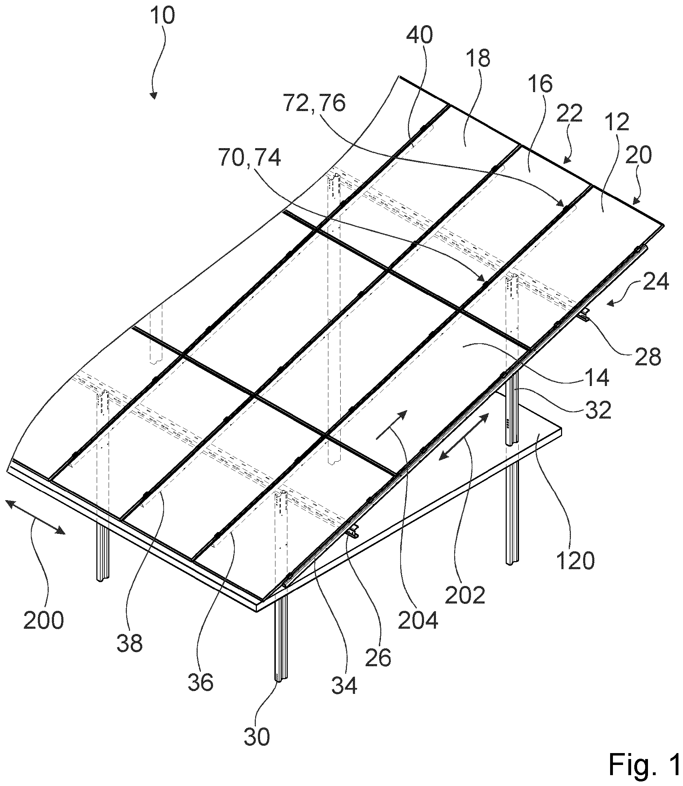

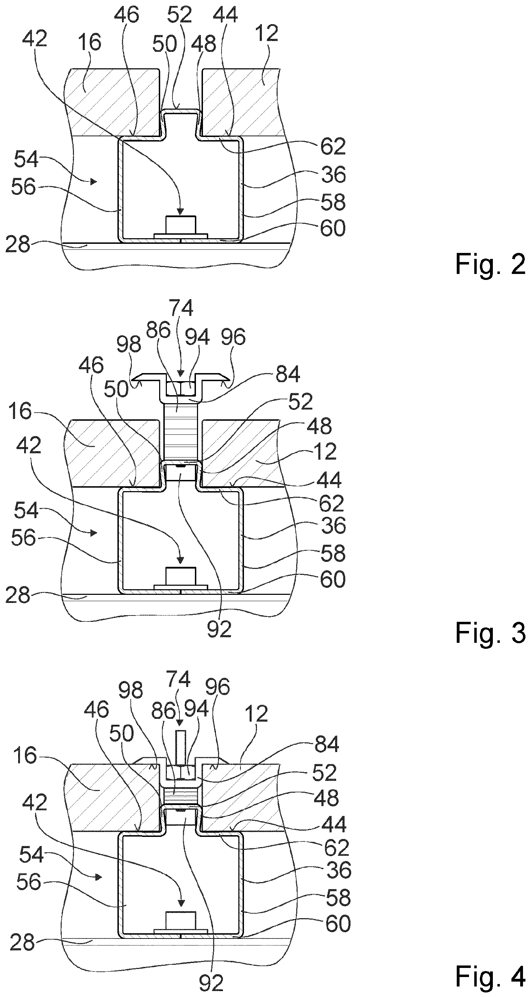

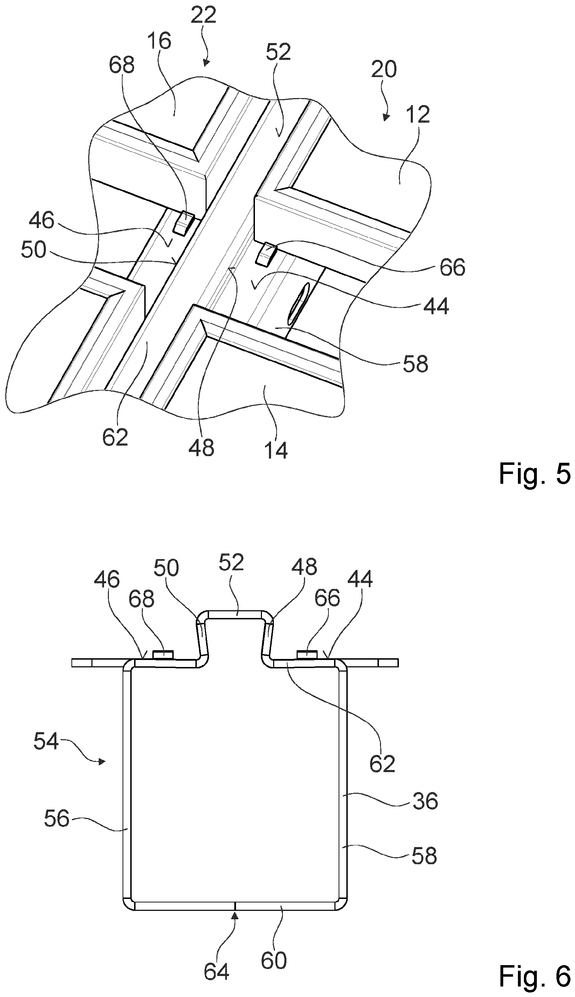

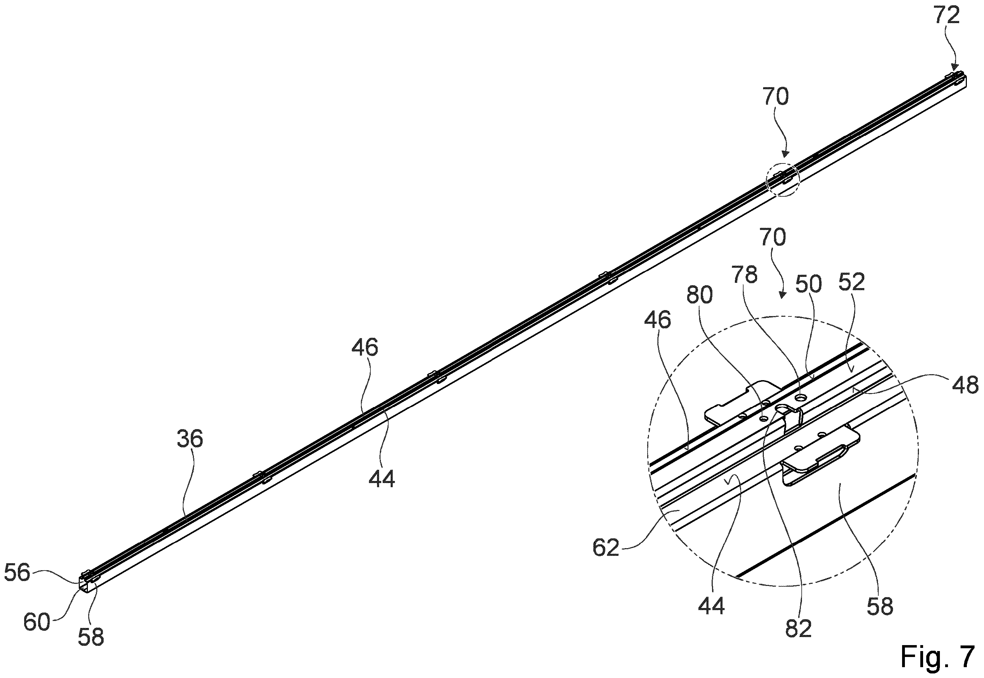

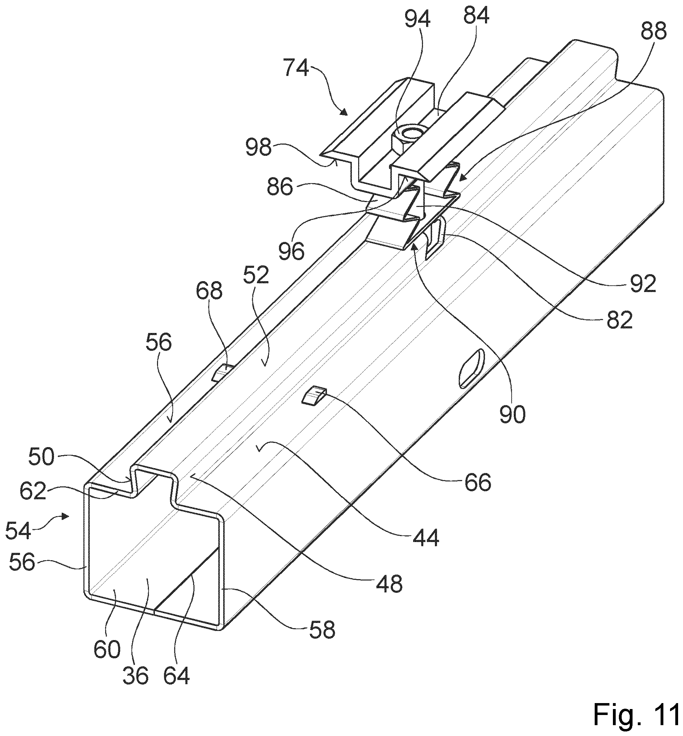

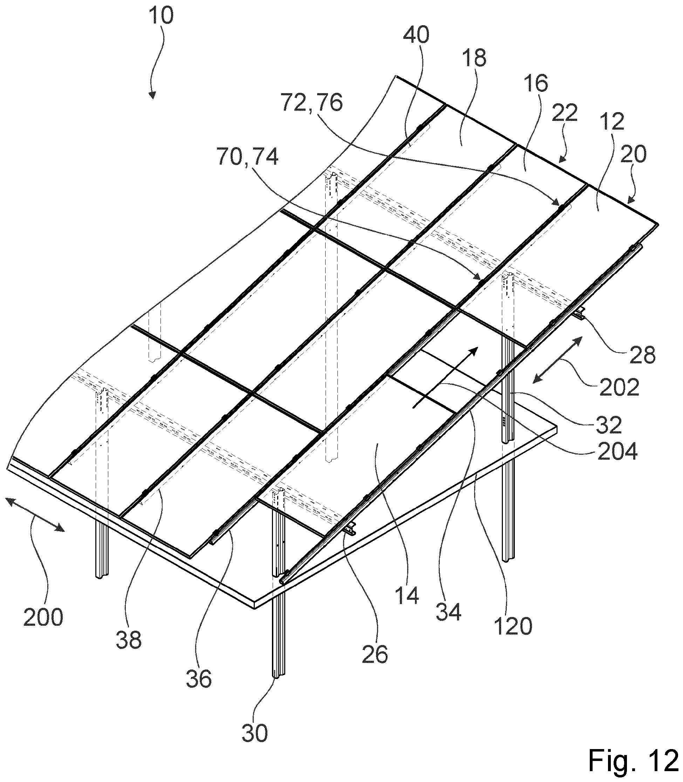

Die Figuren 1 bis 12 zeigen eine erfindungsgemäße Solarmodulbefestigungsvorrichtung 10. Die Solarmodulbefestigungsvorrichtung 10 ist zur Anbindung von Solarmodulen 12, 14, 16, 18 vorgesehen. Die Solarmodulbefestigungsvorrichtung 10 ist zur starren Anbindung von mehreren Solarmodulen 12, 14, 16, 18 vorgesehen. Die Solarmodulbefestigungsvorrichtung 10 ist vorzugsweise zur ausrichtungsfesten Montage von einer Vielzahl von Solarmodulen 12, 14, 16, 18 ausgebildet. Die Solarmodule 12, 14, 16, 18 sind mittels der Solarmodulbefestigungsvorrichtung vorzugsweise in einer fixierten Ausrichtung auf einem Untergrund 120 montiert. Mittels der Solarmodulaufständervorrichtung 10 sind eine Vielzahl von Solarmodulen 12, 14, 16, 18 in einer Vielzahl von Reihen 20, 22, nebeneinander montiert. Beispielhaft sind dabei in jeder Reihe 20, 22 drei Solarmodule 12, 14, 16, 18 angeordnet. Grundsätzlich wäre es auch denkbar, dass eine andere Anzahl an Solarmodulen 12, 14, 16, 18 in einer Reihe angeordnet sind. In einer Reihe 20, 22 sind zumindest zwei Solarmodule 12, 14, 16, 18 angeordnet. Vorzugsweise ist es auch denkbar, dass vier oder mehr als vier Solarmodule 12, 14, 16, 18 in einer Reihe 20, 22 angeordnet sind. Die Solarmodulbefestigungsvorrichtung 10 weist zumindest eine Reihe 20, 22 an Solarmodulen auf. Die Solarmodulbefestigungsvorrichtung 10 weist vorzugsweise eine Vielzahl an Reihen 20, 22 an Solarmodulen 12, 14, 16, 18 auf. Je nach Erstreckung in einer Längsachse 200 der Solarmodulbefestigungsvorrichtung 10 kann diese zwischen zwei und zehn, oder mehr Reihen 20, 22 an Solarmodulen 12, 14, 16, 18 aufweisen.

Die Solarmodulbefestigungsvorrichtung 10 weist ein Grundgestell 24 auf. Das Grundgestell 24 weist vorzugsweise zumindest zwei Querträger 26, 28 auf. Die Querträger 26, 28 verlaufen vorzugsweise parallel zueinander. Die Querträger sind vorzugsweise als Stahlträger ausgebildet. Der erste Querträger 26 ist als ein vorderer Querträger ausgebildet. Der vordere Querträger 26 ist als ein unterer Querträger ausgebildet. Der zweite Querträger 28 ist als ein hinterer Querträger ausgebildet. Der hintere Querträger 28 ist als ein oberer Querträger ausgebildet. Der hintere Querträger 28 ist auf einer größeren Höhe angeordnet als der vordere Querträger. Durch die Anordnung der Querträger 26, 28 auf unterschiedlichen Höhen sind die Solarmodule 12, 14, 16, 18 mittels der Solarmodulbefestigungsvorrichtung 10 geneigt aufgeständert. Das Grundgestell 24 weist je Querträger 26, 28 mehrere Stützelemente 30, 32 auf. Die Stützelemente 30, 32 sind als Rammprofile ausgebildet, die dazu vorgesehen sind, zur Befestigung in den Untergrund 120eingerammt zu werden. Je Querträger 26, 28 weist das Grundgestellt 24 zumindest zwei Stützelemente 30, 32 auf. Je nach Länge der Querträger 26, 28 weist das Grundgestell mehr als zwei Stützelemente 30, 32 zur Befestigung an dem Untergrund 120 auf. Grundsätzlich wäre es auch denkbar, dass die Stützelemente 30, 32 auf eine andere Art ausgebildet und/oder mit dem Untergrund 120 verbunden sind. Beispielsweise wäre auch eine Verschraubung, oder eine Einbetonierung denkbar.

Die Solarmodulbefestigungsvorrichtung 10 weist eine erste Montageschiene 34 zur Befestigung mehrerer Solarmodule 12, 14, 16, 18 auf. Die Solarmodulbefestigungsvorrichtung 10 weist eine zweite Montageschiene 36 zur Befestigung mehrerer Solarmodule 12, 14, 16, 18 auf. Je Reihe 20, 22 an Solarmodulen 12, 14, 16, 18 weist die Solarmodulbefestigungsvorrichtung 10 jeweils zwei Montageschienen 34, 36 auf. Die Solarmodulbefestigungsvorrichtung 10 weist weitere Montageschienen 38, 40 auf, von denen lediglich zwei weitere in den Figuren dargestellt sind. Je nach Erstreckung in der Längsachse 200 der Solarmodulbefestigungsvorrichtung 10 weist die Solarmodulbefestigungsvorrichtung 10 mehr oder weniger Montageschienen 34, 36, 38, 40 und damit Reihen 20, 22 an Solarmodulen 12, 14, 16, 18 auf. Vorzugsweise weist die Solarmodulbefestigungsvorrichtung 10 (n+1) Montageschienen 34, 36, 38, 40 auf, wobei n die Anzahl an Reihen 20, 22 an Solarmodulen 12, 14, 16, 18 bezeichnet. Vorzugsweise weist die Solarbefestigungsvorrichtung 10 genau eine Montageschiene 34, 36, 38, 40 mehr auf als Reihen 20, 22 an Solarmodulen 12, 14, 16, 18. Die Montageschienen 34, 36, 38, 40 sind jeweils zumindest im Wesentlichen in einer Querachse 202 der Solarmodulbefestigungsvorrichtung 10 ausgerichtet. Vorzugsweise sind die Montageschienen 34, 36, 38, 40 orthogonal zu den Querträgern 26, 28 ausgerichtet. Die Montageschienen 34, 36, 38, 40 liegen vorzugsweise auf einer Oberseite der Querträger 26, 28 auf. Die Montageschienen 34, 36, 38, 40 sind vorzugsweise auf einer Oberseite der Querträger 26, 28 starr montiert. Vorzugsweise sind die Montageschienen 34, 36, 38, 40 über eine Kraft- und/oder Formschlussverbindung fest mit den Querträgern 26, 28 verbunden. Vorzugsweise sind die Montageschienen 34, 36, 38, 40 jeweils mittels zumindest einer Schraubenverbindung 42 mit den Querträgern 26, 28 verbunden.

Die Montageschienen 34, 36, 38, 40 sind vorzugsweise jeweils zur teilweisen Anbindung von Solarmodulen 12, 14, 16, 18 zwei benachbarter Reihen 20, 22 vorgesehen. Die Montageschienen 34, 36, 38, 40 sind jeweils dazu vorgesehen, Solarmodule 12, 14, 16, 18 zwei benachbarter Reihen 20, 22 in ihren Seitenbereichen fest anzubinden. Die Montageschiene 34 ist als eine erste, seitliche Montageschiene 34 ausgebildet. Die erste Montageschiene 34 ist zur teilweisen Anbindung von Solarmodulen 12, 14 der ersten Reihe 20 vorgesehen. Die erste Montageschiene 34 ist zur Anbindung der Solarmodule 12, 14 an ihrem ersten Seitenbereich vorgesehen. Die Montageschiene 36 ist als eine zweite Montageschiene ausgebildet. Die Montageschiene 36 ist zusammen mit der ersten Montageschiene 34 zur Anbindung der Solarmodule 12, 14 der ersten Reihe 20 vorgesehen. Die Montageschiene 36 ist zur teilweisen Anbindung der Solarmodule 12, 14 der ersten Reihe 20 und der Solarmodule 16 der zweiten Reihe 22 vorgesehen.

Die Montageschienen 34, 36, 38, 40 sind vorzugsweise im Wesentlichen gleich ausgebildet. Vorzugsweise sind die Montageschienen 34, 36, 38, 40 der Solarmodulbefestigungsvorrichtung 10 identisch ausgebildet. Im Folgenden wird deshalb lediglich die eine Montageschiene 36 im Detail beschrieben. Alle anderen Montageschienen 34, 38, 40 sind gleich ausgebildet. Zur Erläuterung der weiteren Montageschienen 34, 38, 40 kann deshalb die folgende Beschreibung der einen Montageschiene 36 herangezogen werden.

Die Montageschiene 36 weist eine erste, zumindest im Wesentlichen durchgängige Auflagefläche 44 auf. Die Auflagefläche 44 ist dazu vorgesehen, dass Solarmodule 12, 14 darauf montierbar sind. Die Auflagefläche 44 ist als eine Stützfläche ausgebildet. Die Auflagefläche 44 ist dazu vorgesehen, dass Solarmodule 12, 14 in einem montierten Zustand darauf aufliegen. Die Auflagefläche 44 ist dazu vorgesehen, dass Solarmodule 12, 14 zur Befestigung aufschiebbar sind. Die Auflagefläche 44 ist dazu vorgesehen, dass Solarmodule 12, 14 einer Reihe 20 mit ihren Seitenrändern darauf aufliegen können. Die Auflagefläche 44 ist eben ausgebildet. Die Auflagefläche 44 erstreckt sich von einem vorderen Ende bis an ein hinteres Ende der Montageschiene 36. Die Auflagefläche 44 erstreckt sich vorzugsweise über eine gesamte Länge der Montageschiene 36. Die Auflagefläche 44 ist vorzugsweise durchgängig ausgebildet. Grundsätzlich wäre aber auch eine geteilte Auflagefläche 44 denkbar, die durch Teilsegmente gebildet ist, die durch Unterbrechungen voneinander getrennt sind. Die erste Auflagefläche 44 ist von einem ersten Randbereich der Montageschiene gebildet. Die erste Auflagefläche ist in dem ersten, rechten Randbereich der Montageschiene 36 angeordnet.

Die Montageschiene 36 weist eine zweite, zumindest im Wesentlichen durchgängige Auflagefläche 46 auf. Die zweite Auflagefläche 46 ist zur Montage weiterer Solarmodule vorgesehen. Die Auflagefläche 46 ist dazu vorgesehen, dass Solarmodule 16 darauf montierbar sind. Die Auflagefläche 46 ist als eine Stützfläche ausgebildet. Die Auflagefläche 46 ist dazu vorgesehen, dass Solarmodule 16 in einem montierten Zustand darauf aufliegen. Die Auflagefläche 46 ist dazu vorgesehen, dass Solarmodule 16 zur Befestigung aufschiebbar sind. Die Auflagefläche 46 ist dazu vorgesehen, dass Solarmodule 16 einer Reihe 22 mit ihren Seitenrändern darauf aufliegen können. Die Auflagefläche 46 ist eben ausgebildet. Die Auflagefläche 46 erstreckt sich von einem vorderen Ende bis an ein hinteres Ende der Montageschiene 36. Die Auflagefläche 46 erstreckt sich vorzugsweise über eine gesamte Länge der Montageschiene 36. Die Auflagefläche 46 ist vorzugsweise durchgängig ausgebildet. Grundsätzlich wäre aber auch eine geteilte Auflagefläche 46 denkbar, die durch Teilsegmente gebildet ist, die durch Unterbrechungen voneinander getrennt sind. Die zweite Auflagefläche 46 verläuft parallel zu der ersten Auflagefläche 44. Die zweite Auflagefläche 46 ist beabstandet zu der ersten Auflagefläche 44 angeordnet. Die zwei Auflageflächen 44, 46 sind vorzugsweise im Wesentlichen gleich ausgebildet. Die erste Auflagefläche 46 ist in Querrichtung der Montageschiene 36 beabstandet zu der ersten Auflagefläche 44 angeordnet. Die zweite Auflagefläche 46 ist von einem zweiten Randbereich der Montageschiene 36 gebildet. Die zweite Auflagefläche 46 ist in dem zweiten, linken Randbereich der Montageschiene 36 angeordnet. Die zweite Auflagefläche 46 ist von dem, dem ersten Randbereich, der die ersten Auflagefläche 44 ausbildet, gegenüberliegenden zweiten Randbereich der Montageschiene 36 ausgebildet.

Die Montageschiene 36 weist eine erste vertikale Wandung 48 auf. Die erste vertikale Wandung 48 bildet zumindest in einem Teilbereich eine seitliche Abstützfläche für die Solarmodule 12, 14 aus. Die erste vertikale Wandung 48 ist der ersten Abstützfläche 44 zugeordnet. Die erste vertikale Wandung 48 ist auf einer Innenseite der ersten Abstützfläche 44 angeordnet. Die erste vertikale Wandung 48 ist auf einer der zweiten Abstützfläche 46 zugewandten Seite der ersten Abstützfläche 44 angeordnet. Die Abstützfläche 44 geht an ihrer Innenseite in die vertikale Wandung 48 über. Die vertikale Wandung 48 ist dazu vorgesehen, dass sich Solarmodule 12, 14 der Reihe 20 seitlich daran abstützen können. Die vertikale Wandung 48 ist zur Längsführung der Solarmodule 12, 14 der Reihe 20 vorgesehen. Die vertikale Wandung 48 ist zur seitlichen Positionierung der Solarmodule 12, 14 ausgebildet. Die vertikale Wandung 48 ist schräg ausgebildet. Die vertikale Wandung 48 ist zu der ersten Abstützfläche 44 hin geneigt. Die vertikale Wandung 48 schließt vorzugsweise einen Winkel von 84 Grad mit der Abstützfläche 44 ein. Vorzugsweise liegt ein Winkel, den die vertikale Wandung 48 mit der ersten Abstützfläche 44 einschließt, zwischen 75 und 89 Grad, besonders bevorzugt zwischen 80 und 85 Grad. Durch die schräge Ausrichtung der vertikalen Wandung 48 ist eine Kontaktfläche der Wandung 48, an der die Solarmodule anschlagen können sehr klein gehalten, wodurch bei einer Montage, insbesondere einem Aufschieben des entsprechenden Solarmoduls 12, 14 eine Reibung zwischen Solarmodul 12, 14 und der vertikalen Wandung 48 vorteilhaft klein gehalten werden kann. Dadurch kann eine Verschiebekraft zum Verschieben eines Solarmoduls 12, 14 auf der Montageschiene 36 vorteilhaft klein gehalten werden.

Die Montageschiene 36 weist eine zweite vertikale Wandung 50 auf. Die zweite vertikale Wandung 50 bildet zumindest in einem Teilbereich eine seitliche Abstützfläche für die Solarmodule 16 aus. Die zweite vertikale Wandung 50 ist der zweiten Abstützfläche 46 zugeordnet. Die zweite vertikale Wandung 50 ist auf einer Innenseite der zweiten Abstützfläche 46 angeordnet. Die zweite vertikale Wandung 50 ist auf einer der ersten Abstützfläche 44 zugewandten Seite der zweiten Abstützfläche 46 angeordnet. Die zweite Abstützfläche 46 geht an ihrer Innenseite in die zweite vertikale Wandung 50 über. Die zweite vertikale Wandung 50 ist dazu vorgesehen, dass sich Solarmodule 16 der Reihe 22 seitlich daran abstützten können. Die zweite vertikale Wandung 50 ist zur Längsführung der Solarmodule 16 der Reihe 22 vorgesehen. Die zweite vertikale Wandung 50 ist zur seitlichen Positionierung der Solarmodule 16 ausgebildet. Die zweite vertikale Wandung 50 ist ebenfalls schräg ausgebildet. Die zweite vertikale Wandung 50 ist zu der zweiten Abstützfläche 46 hin geneigt. Die zweite vertikale Wandung 50 schließt vorzugsweise einen Winkel von 84 Grad mit der Abstützfläche 46 ein. Vorzugsweise liegt ein Winkel, den die zweite vertikale Wandung 50 mit der zweiten Abstützfläche 46 einschließt, zwischen 75 und 89 Grad, besonders bevorzugt zwischen 80 und 85 Grad. Durch die schräge Ausrichtung der vertikalen Wandung 50 ist eine Kontaktfläche der Wandung 50, an der die Solarmodule 16 anschlagen können, sehr klein gehalten, wodurch bei einer Montage, insbesondere einem Aufschieben des entsprechenden Solarmoduls 16 eine Reibung zwischen dem Solarmodul 16 und der vertikalen Wandung 50 vorteilhaft klein gehalten werden kann. Dadurch kann eine Verschiebekraft zum Verschieben eines Solarmoduls 16 auf der Montageschiene 36 vorteilhaft klein gehalten werden.

Die Montageschiene 36 weist eine zu den Auflageflächen 44, 46 erhöhte Montagefläche 52 auf. Die erhöhte Montagefläche 52 ist zwischen den zwei Auflageflächen 44, 46 angeordnet. Die erhöhte Montagefläche 52 ist jeweils auf einer Innenseite der Auflageflächen 44, 46 angeordnet. Die erhöhte Montagefläche 52 ist zwischen den zwei vertikalen Wandungen 48, 50 angeordnet. Die erhöhte Montagefläche 52 ist jeweils auf einer Innenseite der vertikalen Wandungen 48, 50 angeordnet. Die erhöhte Montagefläche 52 ist jeweils an einem oberen Ende der vertikalen Wandungen 48, 50 angeordnet. Die Montagefläche 52 geht jeweils in die vertikalen Wandungen 48, 50 über. Die erhöhte Auflagefläche 52 ist zur Befestigung von Befestigungsmodulen 74, 76 zur Anbindung der Solarmodule 12, 14, 16 vorgesehen.

Die Montageschiene 36 ist als Profilrohr ausgebildet. Die Montageschiene 36 ist als ein Metallrohr ausgebildet. Beispielsweise kann die Montageschiene 36 als ein Stahlrohr ausgebildet sein. Die Montageschiene 36 weist einen teilweise rechteckigen Querschnitt auf. Die Montageschiene 36 weist einen im Wesentlichen rechteckigen Grundkörper 54 auf. Die Montageschiene 36 weist zwei Seitenwandungen 56, 58, eine Bodenwandung 60 und eine Deckenwandung 62 auf. Die Seitenwandungen 56, 58, die Bodenwandung 60 und die Deckenwandung 62 bilden den Grundkörper 54 aus. Die Seitenwandungen 56, 58, die Bodenwandung 60 und die Deckenwandung 62 sind einstückig miteinander ausgebildet. Die Montageschiene 36 ist von einem entsprechend gebogenen Blech, insbesondere Metallblech gebildet. Die Bodenwandung 60 weist vorzugsweise eine Schweißnaht 64 auf, an der die Enden des gebogenen Blechs zur Herstellung des geschlossenen Profilrohrs miteinander verschweißt sind. Grundsätzlich wäre es auch denkbar, dass die Montageschiene 36 als ein Strangpressprofil ausgebildet ist. Die Montageschiene 36 weist in ihrer Bodenwandung 60 zur Anbindung an die Querträger 26, 28 zumindest jeweils ein Befestigungsloch 108 auf. Vorzugsweise weist die Montageschiene 36 zumindest zwei Befestigungslöcher 108 auf. Grundsätzlich ist es auch denkbar, dass die Befestigungsschiene 36 mehr als zwei Befestigungslöcher 108 aufweist, sodass die Montageschiene 36 mit mehreren Querträgern 26, 28 variabel mit unterschiedlich beabstandeten Querträgern 26, 28 verbindbar ist. Die Befestigungslöcher 108 sind gleich ausgebildet, weswegen im Folgenden nur eines näher beschrieben wird. Das Befestigungsloch 108 ist dazu vorgesehen, dass ein Schraubenelement der Schraubenverbindung 42 zur Anbindung an einen Querträger 26, 28 hindurchgeführt werden kann. Das Befestigungsloch 108 ist als ein Langloch ausgebildet. Dadurch kann die Montageschiene 36 vor dem Festziehen mittels der Schraubenverbindung 42 zu dem entsprechenden Querträger 26, 28 verschoben und korrekt positioniert werden. Das Befestigungsloch 108 bildet an einem Ende ein Montageloch 106 aus. Das Montageloch 106 weist einen größeren Durchmesser auf als das als Langloch ausgebildete Befestigungsloch 108. Das Montageloch 106 weist einen Durchmesser auf, der größer ist als ein Kopfdurchmesser einer Befestigungsschraube der Schraubenverbindung 42. Durch das Montageloch 106 kann die Befestigungsschraube der Schraubenverbindung 42 zur Montage der Montageschiene 36 an dem Querträger 26, 28 einfach in das Befestigungsloch 108 eingeführt werden. Auf der gegenüberliegenden Seite des Befestigungslochs 108 weist die Montageschiene 36, insbesondere in ihrer Montagefläche 52 ein Montageloch 110 auf, das dazu vorgesehen ist, das ein Werkzeug zum Anziehen der Befestigungsschraube der Schraubenverbindung 42 hindurchgeführt werden kann.

Die Auflageflächen 44, 46, die vertikalen Wandungen 48, 50 und die Montagefläche 52 sind von der Deckenwandung 62 der Montageschiene 36 ausgebildet. Die Auflageflächen 44, 46, die vertikalen Wandungen 48, 50 und die Montagefläche 52 bilden die Deckenwandung 62 aus. Die Auflageflächen 44, 46, die vertikalen Wandungen 48, 50 und die Montagefläche 52 sind einstückig mit der Deckenwandung 62 ausgebildet.

Die Montageschiene 36 weist zumindest ein Montagesicherungselement 66 auf, das dazu vorgesehen sind, ein Aufschieben von Solarmodulen 12, 14 auf die Auflagefläche 44 in einer Montagerichtung 204 zuzulassen und die Solarmodule 12, 14 in Montagepositionen gegen ein Verschieben entgegen der Montagerichtung 204 zu sichern. Die Montageschiene 36 weist zumindest ein weiters Montagesicherungselement 68 auf, das dazu vorgesehen ist, ein Aufschieben von Solarmodulen 16 auf die Auflagefläche 46 in einer Montagerichtung 204 zuzulassen und die Solarmodule 16 in Montagepositionen gegen ein Verschieben entgegen der Montagerichtung 204 zu sichern. Die Montageschiene 36 weist je Reihe 20, 22 vorzugsweise für jedes Solarmodul 12, 14, 16 der Reihe 20, 22 je ein Montagesicherungselement 66, 68 auf. Die Montagschiene 36 weist je Auflagefläche 44, 46 für jedes zu befestigende Solarmodul 12, 14, 16 ein Montagesicherungselement 66, 68 auf. In dem gezeigten Ausführungsbeispiel, in dem die Reihen 20, 22 jeweils aus drei Solarmodulen 12, 14, 16, 18 gebildet sind, weist die Montageschiene 36 sechs Montagesicherungselemente 66, 68 auf, wobei je drei Montagesicherungselemente 66, 68 je einer Auflagefläche 44, 46 zugeordnet sind. Die Montagesicherungselemente 66, 68 sind jeweils einer Auflagefläche 44, 46 zugeordnet. Die Montagesicherungselemente 66, 68 sind vorzugsweise gleich ausgebildet. Deshalb wird im Folgenden lediglich das eine Montagesicherungselement 66 näher beschrieben. Die andere Montagesicherungselemente 68 der Montageschiene 36 sind gleich ausgebildet und eine Erläuterung kann an der folgenden Beschreibung des einen Montagesicherungselements 66 erfolgen.

Das Montagesicherungselement 66 ist auf der Auflagefläche 44 angeordnet. Das Montagesicherungselement 66 erhebt sich von dieser. Das Montagesicherungselement erstreckt sich von der Auflagefläche 44 nach oben weg. Das Montagesicherungselement 66 erstreckt sich der Montagerichtung 204 von der Auflagefläche 44 weg. Das Montagesicherungselement 66 weist eine Rampenfläche auf, die sich von dem der Auflagefläche 44 weg erstreckt. Die Rampenfläche weist in Montagerichtung 204 einen größer werdenden Abstand von der Auflagefläche 44 auf. Die Rampenfläche des Montagesicherungselements 66 ist dazu vorgesehen, dass ein Solarmodul 12, 14 während einer Montage, beim Verschieben auf der Auflagefläche 44 in Montagerichtung 204 über die Rampenfläche das Montagesicherungselement 66 überfahren kann. Das Montagesicherungselement 66 weist eine Sicherungsfläche auf. Die Sicherungsfläche ist im Wesentlichen orthogonal zu der Auflagefläche 44 ausgerichtet. Die Sicherungsfläche des Montagesicherungselements 66 ist dazu vorgesehen, dass ein Solarmodul 12, 14 mit seinem unteren Rand in seiner Montageposition formschlüssig daran anschließt. Die Sicherungsfläche 66 ist in Richtung eines hinteren, oberen Endes der Montageschiene ausgerichtet. Das Montagesicherungselement 66 ist als eine ausgebogene Lasche ausgebildet. Das Montagesicherungselement 66 ist einstückig mit der Auflagefläche 44 ausgebildet. Zur Ausbildung des Montagesicherungselements 66 wird ein Teilbereich der Auflagefläche 44 ausgeschnitten und nach oben ausgeboben.

Die Montageschiene 36 weist zur Befestigung eines Solarmoduls 12, 16 einer Reihe 20, 22 einen Befestigungsbereich 70 auf. Der Befestigungsberiech 70 ist zur Anbindung eines Befestigungsmoduls 74 vorgesehen. Der Befestigungsbereich 70 ist zur Anbindung von zwei nebeneinander angeordneten Solarmodulen 12, 16 von zwei nebeneinander angeordneten Reihen 20, 22 vorgesehen. Die Montageschiene weist zur Befestigung eines Solarmoduls 12, 16 einer Reihe 20, 22 einen zweiten Befestigungsbereich 72 auf. Der Befestigungsberiech 72 ist zur Anbindung eines Befestigungsmoduls 76 vorgesehen. Der Befestigungsbereich 72 ist zur Anbindung von zwei nebeneinander angeordneten Solarmodulen 12, 16 von zwei nebeneinander angeordneten Reihen 20, 22 vorgesehen. Die Montageschiene 36 weist je Solarmodul 12, 14, 16 einer Reihe 20, 22, bzw. für zwei in den Reihen 20, 22 nebeneinander angeordneten Solarmodulen 12, 14, 16 jeweils zwei Befestigungsbereiche 70, 72 auf. Grundsätzlich wäre es auch denkbar, dass die Montageschiene 36 zur Befestigung eines Solarmoduls 12, 14, 16 einer Reihe, bzw. für zwei in den Reihen 20, 22 nebeneinander angeordneten Solarmodulen 12, 14, 16 lediglich einen Befestigungsbereich 70, oder drei Befestigungsbereiche 70, 72 aufweist.

Die Solarmodulbefestigungsvorrichtung 10 weist zur Anbindung des Solarmoduls 12, 14, 16 einer Reihe, bzw. für zwei in den Reihen 20, 22 nebeneinander angeordneten Solarmodulen 12, 14, 16 ein erstes Befestigungsmodul 74 auf. Das Befestigungsmodul 74 ist zur Anbindung an einen der Befestigungsbereiche 70, 72 vorgesehen. Die Solarmodulbefestigungsvorrichtung 10 weist zur Anbindung des Solarmoduls 12, 14, 16 einer Reihe, bzw. für zwei in den Reihen 20, 22 nebeneinander angeordneten Solarmodulen 12, 14, 16 ein zweites Befestigungsmodul 76 auf. Die Solarmodulbefestigungsvorrichtung 10 weist zur Anbindung des Solarmoduls 12, 14, 16 einer Reihe, bzw. zur Anbindung von zwei in den Reihen 20, 22 nebeneinander angeordneten Solarmodulen 12, 14, 16 an die Montageschiene 36 jeweils zwei Befestigungsmodule 74, 76 auf. Die Befestigungsmodule 74, 76 sind an den Befestigungsbereichen 70, 72 verliersicher an der Montageschiene 36 vormontierbar. Die Befestigungsmodule 74, 76 und die Befestigungsbereiche 70, 72, an denen sie montierbar sind, sind gleich ausgebildet. Im Folgenden wird deshalb lediglich das eine Befestigungsmodul 74 und der Befestigungsbereich 70 näher beschrieben. Das weitere Befestigungsmodul 76 und der Befestigungsbereich 70 zur Anbindung der beiden benachbarten Solarmodule 12, 16 sowie alle weiteren Befestigungsmodule und Befestigungsbereiche zur Anbindung der weiteren Solarmodule sind gleich ausgebildet. Eine Beschreibung dieser kann anhand der folgenden Beschreibung des Befestigungsmoduls 74 und des Befestigungsbereichs 70 erfolgen.

Die Montageschiene 36 weist je Befestigungsbereich 70, 72 der erhöhten Montagefläche 52 zur Befestigung eines Befestigungsmoduls 74, 76 jeweils mehrere Montagelöcher 78, 80, 82 auf. Der Befestigungsbereich 70 weist drei Montagelöcher 78, 80, 82 auf. Zwei der Montagelöcher 78, 80 sind als Vormontage- und Positionierlöcher ausgebildet. Die zwei als Vormontage- und Positionierlöcher ausgebildeten Montagelöcher 78, 80 sind zur Vormontage und vorzugsweise zur korrekten Positionierung eines Befestigungsmoduls 74, 76 vorgesehen. Die zwei als Vormontage- und Positionierlöcher ausgebildeten Montagelöcher 78, 80 weisen jeweils einen unterschiedlichen Durchmesser auf. Das als Vormontage- und Positionierloch ausgebildete Montageloch 78 weist einen größeren Durchmesser auf als das Vormontage- und Positionierloch 80. Durch die unterschiedlichen Durchmesser kann eine richtige Positionierung eines Befestigungsmoduls 74, 76 durch die zwei als Vormontage- und Positionierlöcher ausgebildeten Montagelöcher 78, 80 erreicht werden. Die zwei als Vormontage- und Positionierlöcher ausgebildeten Montagelöcher 78, 80 sind beabstandet zueinander angeordnet. Die zwei als Vormontage- und Positionierlöcher ausgebildeten Montagelöcher 78, 80 sind jeweils auf gegenüberliegenden Seiten des dritten Montagelochs 82 angeordnet. Das dritte Montageloch 80 ist zwischen den zwei als Vormontage- und Positionierlöcher ausgebildeten Montagelöchern 78, 80 angeordnet.

Das dritte Montageloch 82 ist als ein Befestigungsloch ausgebildet. Die Montageschiene 36 weist in der Montagefläche 52 das als Befestigungsloch ausgebildete Montageloch 82 auf. Das als Befestigungsloch ausgebildete Montageloch 82 ist zwischen den beiden als Vormontage- und Positionierlöcher ausgebildeten Montagelöchern 78, 80 angeordnet. Das als Befestigungsloch ausgebildete Montageloch 82 ist dazu vorgesehen, dass ein Befestigungsmittel, wie insbesondere eine Schraube zur Anbindung eines Befestigungsmoduls hindurch ragt.

Das als Befestigungsloch ausgebildete Montageloch 82 erstreckt sich bis in die vertikale Wandung 48, die zwischen der Montagefläche 52 und der ersten Auflagefläche 44 angeordnet ist. Das als Befestigungsloch ausgebildete Montageloch 82 erstreckt sich von der Montagefläche 52 bis in die vertikale Wandung 48. Das als Befestigungsloch ausgebildete Montageloch 82 bildet in der Montagefläche 52 ein sich von der vertikalen Wandung 48 her erstreckendes Langloch aus, das sich bis kurz hinter die Mitte der Montagefläche 52 erstreckt. Das als Befestigungsloch ausgebildete Montageloch 82 weist in der Montagefläche 52 einen ersten Durchmesser auf, der größer ist als ein Schaftdurchmesser eines Befestigungsmittels, aber kleiner als ein Kopfdurchmesser des Befestigungsmittels eines Montagemoduls 74, 76. Der sich in die vertikale Wandung 48 erstreckende Teilbereich weist einen zweiten Durchmesser auf, der größer ist als ein Kopfdurchmesser des Befestigungsmittels eines Montagemoduls 74, 76. Vorzugsweise erstreckt sich der Teilbereich des als Befestigungsloch ausgebildeten Montagelochs 82 im Wesentlichen über eine gesamte Höhe der vertikalen Wandung 48. Durch den in der vertikalen Wandung 48 angeordneten Teilbereich des Montagelochs kann ein Befestigungsmittel mit seinem Kopf hindurchgeführt werden.

Das Befestigungsmodul 74 ist dazu vorgesehen, wenigstens ein Solarmodul 14, 16 klemmend an der Montageschiene 36 zu befestigen. Das Befestigungsmodul 74 ist dazu vorgesehen, an dem als Befestigungsloch ausgebildeten Montageloch 82 befestigt zu werden. Das Befestigungsmodul 74 ist dazu vorgesehen, an dem als Befestigungsloch ausgebildeten Montageloch 82 selbstsichernd vormontiert zu werden. Das Befestigungsmodul 74 ist seitlich durch den in der vertikalen Wandung 48 angeordneten Teilbereich des Montagelochs 82 in das Montageloch 82 eingebracht zu werden.

Das Befestigungsmodul 74 weist ein Klemmelement 84 auf. Das Befestigungsmodul 86 weist ein Federelement 86 auf. Das Federelement 86 ist zwischen der Montagefläche 52 und dem Klemmelement 84 angeordnet. Das Befestigungsmodul 74 weist ein Schraubenelement 92 auf. Das Schraubenelement 92 ist zur Kopplung mit der Montageschiene 36 vorgesehen. Das Schraubenelement 92 ist dazu vorgesehen, an dem als Befestigungsloch ausgebildeten Montageloch 82 befestigt zu werden. Das Befestigungsmodul 74 weist eine Mutter 94 auf. Die Mutter 94 ist korrespondierend zu dem Schraubenelement 92 ausgebildet. Die Mutter 94 ist dazu vorgesehen, drehfest an dem Klemmelement 84 angebunden zu werden. Über das Schraubenelement 92 und die Mutter 94 ist das Befestigungsmodul 74 fest mit der Montageschiene 36 verbindbar.

Das Klemmelement 84 weist einen U-förmigen Grundköper auf. Das Klemmelement 84 weist eine Bodenplatte auf. In der Bodenplatte des Klemmelements 84 ist ein Durchgangsloch eingebracht, durch das das Schraubenelement 92 mit seinem Gewindeschaft geführt werden kann. Das Klemmelement 84 weist zwei Seitenwandungen auf, die seitlich an die Bodenplatte anschließen. Die Seitenwandungen sind dazu vorgesehen, die Mutter 94 des Befestigungsmoduls 74 drehfest zu sichern. Die Mutter 94 ist zwischen den Seitenwandungen des Klemmelements 84 drehfest angeordnet. Das Klemmelement 84 weist an den oberen Enden der Seitenwandungen angeordnete Klemmflügel auf, die sich nach außen erstrecken. Die Klemmflügel bilden an ihrer Unterseite Klemmflächen 96, 98 aus. Die Klemmflächen 96, 98 sind dazu vorgesehen, in einem montierten Zustand einen Randbereich eines Solarmoduls 12, 16 zu kontaktieren und das entsprechende Solarmodul 12, 16 festzuklemmen. Grundsätzlich wäre es auch denkbar, dass ein Klemmelement, insbesondere ein Klemmelement für eine seitliche Montageschiene 34 lediglich eine Klemmfläche aufweist.

Das Federelement 86 ist vorzugsweise als eine Feder aus einem Kunststoff ausgebildet. Grundsätzlich wäre auch eine Ausbildung aus einem Metall denkbar. Das Federelement 86 ist als eine Druckfeder ausgebildet. Das Federelement 86 weist zwei starre Anbindungsbereiche auf, die durch elastische Federschenkel 116 miteinander verbunden sind. Die Anbindungsbereiche und die elastischen Federschenkel 116 sind einstückig miteinander ausgebildet. Die elastischen Federschenkel 116 sind elastisch zueinander verformbar. Ein erster Anbindungsbereich des Federelements 86 ist zur Kopplung mit dem Klemmelement 84 vorgesehen. Der erste Anbindungsbereich bildet eine ebene Fläche und sich von der ebenen Fläche abstehende Verbindungspins 112, 114 aus. Die Verbindungspins 112, 114 sind dazu vorgesehen, in korrespondierend ausgebildete Löcher auf einer Unterseite der Bodenplatte des Klemmelements 84 formschlüssig angeordnet zu sein. Durch die Verbindungspins 112, 114 kann das Federelement 86 drehfest zu dem Klemmelement 84 positioniert werden. Ein zweiter Anbindungsbereich des Federelements 86 ist zur Kopplung mit der Montagefläche 52 der Montageschiene 36 vorgesehen. Der zweite Anbindungsbereich bildet eine ebene Fläche und sich von der ebenen Fläche abstehende Positionierstifte 88, 90 aus. Die Positionierstifte 88, 90 sind dazu vorgesehen, in die als Vormontage- und Positionierlöcher ausgebildeten Montagelöcher 78, 80 eingebracht zu werden. Der Positionierstift 88 weist einen größeren Durchmesser auf und ist dazu vorgesehen, in dem größeren Montageloch 78 angeordnet zu werden. Der Positionierstift 90 weist einen kleineren Durchmesser auf und ist dazu vorgesehen, in dem kleineren Montageloch 80 angeordnet zu werden. Dadurch ist eine eindeutige Ausrichtung des Federelements 86 zu der Montageschiene 36, also eine eindeutige Ausrichtung des Befestigungsmoduls 74 zu der Montageschiene 36 gegeben.

Das Befestigungsmodul 74 kann nur in einer Weise mit der Montageschiene 36 verbunden werden.

Zur Befestigung der Solarmodule 12, 16 an der Montageschiene 36 wird das Schraubenelement 92 des Befestigungsmoduls 92 angezogen. Durch die drehfest an dem Klemmelement 84 angebundenen Mutter 94 wird durch Anziehen des Schraubenelements 92 die Mutter 94 und damit das Klemmelement 84 in Richtung der Montageschiene 36 insbesondere der Auflageflächen 44, 46 gezogen. Das Federelement 86 wird dabei gestaucht. Das Schraubenelement 92 wird angezogen, bis das Klemmelement 84 mit seinen Klemmflächen 94, 96 auf einer Oberseite eines Randbereichs der Solarmodule 12, 16 aufliegt. Durch weiteres Anziehen des Schraubenelements 92 werden die Solarmodule 12, 16 mit ihren Randbereichen jeweils zwischen der entsprechenden Auflagefläche 44, 46 und den Klemmflächen 96, 98 des Klemmelements 84 eingeklemmt und dadurch fest montiert.

Zum Anziehen der Schraubenelemente 92 des Befestigungsmodule 74 weist die Montagschiene 36 jeweils ein Montageloch 104 auf. Die Montagelöcher 104 sind in der Bodenwandung 60 der Montageschiene 36 eingebracht. Die Montagelöcher 104 sind jeweils in dem Bereich eines Befestigungsbereichs 70, 72 angeordnet. Die Montagelöcher 104 sind jeweils unterhalb eines als Befestigungsloch ausgebildeten Montagelochs 82 eines Befestigungsbereichs 70, 72 angeordnet. Durch die Montagelöcher 104 kann jeweils einfach ein Werkzeug von unten in einen Innenraum der Befestigungsschiene 36 eingeführt werden, um ein Schraubenelement 92 eines Befestigungsmoduls 74, 76 zu erreichen und anzuziehen.

Die Befestigungsbereiche 70, 72 der Montageschiene 36 weisen vorzugsweise zusätzlich Befestigungslaschen 100, 102 auf. Die Befestigungslaschen 100, 102 sind aus den Seitenwandungen 56, 58 ausgebogen und erstrecken sich parallel zu den Auflageflächen 44, 46. Die Befestigungslasche 100 ist der ersten Auflagefläche 44 zugeordnet und erstreckt sich von dieser. Die Befestigungslasche 102 ist der zweiten Auflagefläche 46 zugeordnet und erstreckt sich von dieser. Die Befestigungslaschen 100, 102 erstrecken sich von der jeweiligen Auflagefläche 44, 46 nach außen von der Auflagefläche 44, 46 weg, über die jeweiligen Seitenwandungen 56, 58 hinaus. Die Befestigungslaschen 100, 102 sind zur zusätzlichen oder alternativen Befestigung der Solarmodule 12, 14, 16, 18 vorgesehen. Die Befestigungslaschen 100, 102 sind dazu vorgesehen, dass als Klemmelemente ausgebildete Befestigungselemente daran befestigt werden, um das entsprechende Solarmodul 12, 14, 16, 18 kraft- und/oder formschlüssig anzubinden. Die Befestigungslaschen 100, 102 sind zur alternativen Anbindung der Solarmodule 12, 16, 14, 18 vorgesehen. Anstatt mittels der Befestigungsmodule 74, 76 können die Solarmodule 12, 14, 16, 18 mittels nicht näher dargestellte Verbindungselemente über die Befestigungslaschen 100, 102 fest mit der Montageschiene 36 verbunden werden.

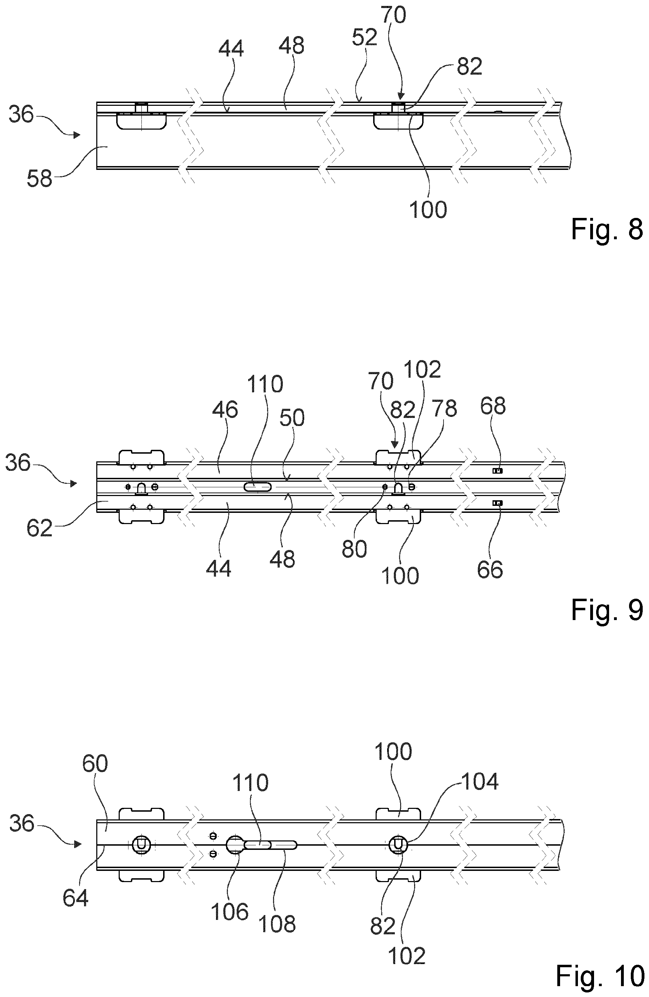

Zu einer Montage der Solarmodule 12, 14, 16, 18 auf den Montageschienen 34, 36, 38 werden zunächst die Befestigungsmodule 74, 76 an den Befestigungsbereichen 70, 72 der Montageschienen 34, 36, 38 vormontiert. Die Befestigungsmodule 74, 76 werden dabei mit ihren Schraubenelementen 92 seitlich in die als Befestigungslöcher ausgebildeten Montagelöcher 82 eingeführt. Die Positionierstifte 88, 90 der Federelemente 86 werden in die entsprechenden als Vormontage- und Positionierlöcher ausgebildeten Montagelöcher 78, 80 eingeführt. Durch das Federelement 86 wird das Schraubenelement 92 und die Mutter 92 auf Spannung gehalten. Das Schraubenelement 92 wird durch das Federelement 86 gegen die Unterseite des Montagefläche 52 gedrückt und so kraftschlüssig gesichert. Die Befestigungsmodule 74. 76 sind verliersicher vormontiert. Die Solarmodule 12, 14, 16, 18 werden an einem unteren Ende auf die entsprechenden Auflageflächen 44, 46 der benachbarten Montageschienen 34, 36, 38 aufgelegt. Die Solarmodule 12, 14, 16, 18 sind durch die Auflageflächen 44, 46, sowie die vertikalen Wandungen 48, 50 positioniert. Die Solarmodule 12, 14, 16, 18 werden dann entsprechend auf den Auflageflächen 44, 46 entlang der Montagerichtung 204 auf den Montageschienen 34, 36, 38 nach oben aufgeschoben. Dabei überdrücken die Solarmodule 12, 14, 16, 18 die in den Auflageflächen integrierten Montagesicherungselemente 66, 68. Hat ein Solarmodul 12, 14, 16, 18 die entsprechenden Montagesicherungselemente 66, 68 überfahren, so ist das Solarmodul 12, 14, 16, 18 mittels des Montagesicherungselements 66, 68 in der entsprechenden Montageposition gesichert. Ist das erste Solarmodul 12 in seiner Montageposition gesichert, kann das zweite Solarmodul 14 der Reihe 20 nachgeschoben werden (siehe Figur 10). Grundsätzlich wäre es auch denkbar, die vorderen Solarmodule 12 jeweils durch das nachkommende Solarmodul 14 nachzuschieben. Sind die Solarmodule 12, 14, 16, 18 in ihren Montagepositionen, durch die Montagesicherungselemente 66, 68 gesichert, vormontiert, können die Befestigungsmodule 74, 76 angezogen werden.

Zur klemmenden Befestigung der Solarmodule 12, 14, 16, 18 werden die entsprechenden Befestigungsmodule angezogen. Dabei werden die Schraubenelemente 92 der Befestigungsmodule 74, 76 angezogen. Durch die Verbindung mit der Mutter 94, die an dem Klemmelement 84 angebunden ist, wird das Klemmelement 84 entgegen der Federkraft des Federelements 86 in Richtung der Montageschiene 36 gezogen. Das Klemmelement 84 liegt in einem montierten Zustand mit seinen Klemmflächen 96, 98 auf den Randbereichen der Solarmodule 12, 14, 16, 18 auf und klemmt diese zwischen sich und der entsprechenden Auflagefläche 44, 46 ein. Die Schraubenelemente 82 der Befestigungsmodule 74, 76 können einfach von unten durch die Montagelöcher 104 erreicht werden.

### Bezugszeichen

- 10: Solarmodulbefestigungsvorrichtun 9
- 12: Solarmodul
- 14: Solarmodul
- 16: Solarmodul
- 18: Solarmodul
- 20: Reihe
- 22: Reihe
- 24: Grundgestell
- 26: Querträger
- 28: Querträger
- 30: Stützelement
- 32: Stützelement
- 34: Montageschiene
- 36: Montageschiene
- 38: Montageschiene
- 40: Montageschiene
- 42: Schraubenverbindung
- 44: Auflagefläche
- 46: Auflagefläche
- 48: vertikale Wandung
- 50: vertikale Wandung
- 52: Montagefläche
- 54: Grundkörper
- 56: Seitenwandung
- 58: Seitenwandung
- 60: Bodenwandung
- 62: Deckenwandung
- 64: Schweißnaht
- 66: Montagesicherungselement
- 68: Montagesicherungselement
- 70: Befestigungsbereich
- 72: Befestigungsbereich
- 74: Befestigungsmodul
- 76: Befestigungsmodul
- 78: Montageloch
- 80: Montageloch
- 82: Montageloch
- 84: Klemmelement
- 86: Federelement
- 88: Positionierstift
- 90: Positionierstift
- 92: Schraubenelement
- 94: Mutter
- 96: Klemmfläche
- 98: Klemmfläche
- 100: Befestigungslasche
- 102: Befestigungslasche
- 104: Montageloch
- 106: Montageloch
- 108: Befestigungsloch
- 110: Montageloch
- 112: Verbindungspin
- 114: Verbindungspin
- 116: Federschenkel
- 120: Untergrund
- 200: Längsachse
- 202: Querachse
- 204: Montagerichtung

## Patentansprüche

1. Solarmodulbefestigungsvorrichtung mit einer Montageschiene (34, 36, 38, 40) zur Befestigung mehrerer Solarmodule (12, 14, 16, 18), wobei die Montageschiene (34, 36, 38, 40) zumindest eine zumindest im Wesentlichen durchgängige Auflagefläche (44, 46) aufweist, auf die die Solarmodule (12, 14, 16, 18) zur Befestigung aufschiebbar sind, **dadurch gekennzeichnet, dass** die Montageschiene (34, 36, 38, 40) zumindest ein Montagesicherungselement (66, 68) aufweist, das dazu vorgesehen ist, ein Aufschieben von Solarmodulen (12, 14, 16, 18) auf die Auflagefläche in einer Montagerichtung (204) zuzulassen und die Solarmodule (12, 14, 16, 18) in Montagepositionen gegen ein Verschieben entgegen der Montagerichtung (204) zu sichern.

2. Solarmodulbefestigungsvorrichtung nach Anspruch 1, **dadurch gekennzeichnet, dass** das zumindest eine Montagesicherungselement (66, 68) auf der Auflagefläche (44, 46) angeordnet ist und sich von dieser erhebt.

3. Solarmodulbefestigungsvorrichtung nach einem der vorhergehenden Ansprüche, **dadurch gekennzeichnet, dass** das zumindest eine Montagesicherungselement (66, 68) als eine aus der Auflagefläche (44, 46) ausgebogene Lasche ausgebildet ist.

4. Solarmodulbefestigungsvorrichtung nach einem der vorhergehenden Ansprüche, **dadurch gekennzeichnet, dass** die Montageschiene (34, 36, 38, 40) eine vertikale Wandung (48, 50) aufweist, die zumindest in einem Teilbereich eine seitliche Abstützfläche für die Solarmodule (12, 14, 16, 18) ausbildet.

5. Solarmodulbefestigungsvorrichtung nach einem der vorhergehenden Ansprüche, **dadurch gekennzeichnet, dass** die vertikale Wandung (48, 50) der Montageschiene (34, 36, 38, 40) schräg ausgebildet ist und lediglich in einem oberen, von der Auflagefläche (44, 46) abgewandten Bereich die seitliche Abstützfläche ausbildet.

6. Solarmodulbefestigungsvorrichtung nach einem der vorhergehenden Ansprüche, **dadurch gekennzeichnet, dass** die Montageschiene (34, 36, 38, 40) eine zweite zumindest im Wesentlichen durchgängige Auflagefläche (44, 46) aufweist, auf die weitere Solarmodule (12, 14, 16, 18) zur Befestigung aufschiebbar sind.

7. Solarmodulbefestigungsvorrichtung nach einem der vorhergehenden Ansprüche, **dadurch gekennzeichnet, dass** die Montageschiene (34, 36, 38, 40) eine zu den Auflageflächen (44, 46) erhöhte Montagefläche (52) aufweist, die sich zwischen den Auflageflächen (44, 46) erstreckt und zur Anbindung von Befestigungsmodulen (74, 76) zur Befestigung der Solarmodule (12, 14, 16, 18) vorgesehen ist.

8. Solarmodulbefestigungsvorrichtung nach einem der vorhergehenden Ansprüche, **dadurch gekennzeichnet, dass** die Montageschiene (34, 36, 38, 40) in einer zu den Auflageflächen (44, 46) erhöhten Montagefläche (52) zur Befestigung eines Befestigungsmoduls (74, 76) mehrere Montagelöcher (78, 80, 82) aufweist.

9. Solarmodulbefestigungsvorrichtung nach Anspruch 8, **dadurch gekennzeichnet, dass** zwei Montagelöcher (78, 80) als Vormontage- und Positionierlöcher ausgebildet sind, die jeweils einen unterschiedlichen Durchmesser aufweisen.

10. Solarmodulbefestigungsvorrichtung nach Anspruch 8, **dadurch gekennzeichnet, dass** die Montageschiene (34, 36, 38, 40) in der Montagefläche (52) ein als Befestigungsloch ausgebildetes Montageloch (82) aufweist, das vorzugsweise zwischen den beiden als Vormontage- und Positionierlöcher ausgebildeten Montagelöchern (78, 80) angeordnet ist und das dazu vorgesehen ist, dass ein Befestigungsmittel, wie insbesondere ein Schraubenelement (92) zur Anbindung eines Befestigungsmoduls (74, 76) hindurch ragt.

11. Solarmodulbefestigungsvorrichtung zumindest nach Anspruch 8, **dadurch gekennzeichnet, dass** die Montageschiene (34, 36, 38, 40) in der Montagefläche (52) ein als Befestigungsloch ausgebildetes Montageloch (82) aufweist, das sich bis in die vertikale Wandung (48) erstreckt, die zwischen der Montagefläche (52) und der ersten Auflagefläche (44) angeordnet ist.

12. Solarmodulbefestigungsvorrichtung zumindest nach Anspruch 8, **gekennzeichnet durch** ein Befestigungsmodul (74, 76), das dazu vorgesehen ist, wenigstens ein Solarmodul (12, 14, 16, 18) klemmend an der Montageschiene (34, 36, 38, 40) zu befestigen, wobei das Befestigungsmodul (74, 76) dazu vorgesehen ist, an einem als Befestigungsloch ausgebildeten Montageloch (82) befestigt zu werden.

13. Solarmodulbefestigungsvorrichtung zumindest nach Anspruch 12, **dadurch gekennzeichnet, dass** das Befestigungsmodul (74, 76) dazu vorgesehen ist, an den Montagelöchern (78, 80, 82) selbstsichernd vormontiert zu werden.

14. Solarmodulbefestigungsvorrichtung zumindest nach Anspruch 12, **dadurch gekennzeichnet, dass** das Befestigungsmodul (74, 76) ein Klemmelement (84) und ein Federelement (86) aufweist, wobei das Federelement (86) zwischen der Montagefläche (52) und dem Klemmelement (84) angeordnet ist.

15. Solarmodulbefestigungsvorrichtung zumindest nach Anspruch 12, **dadurch gekennzeichnet, dass** das Befestigungsmodul (74, 76) über als Vormontage- und Positionierlöcher ausgebildete Montagelöcher (78, 80) positionssicher vormontierbar ist, wobei vorzugsweise das Federelement (86) Positionierstifte aufweist, die zur Vormontage in die als Vormontage- und Positionierlöcher ausgebildeten Montagelöcher (78, 80) eingebracht werden.
